# EUROPEAN PATENT APPLICATION

(11) **EP 3 583 873 A1**
(43) Date of publication of application: **25.12.2019**
(21) Application number: 19172380.8
(22) Date of filing: 02.05.2019
(51) Int. Cl.: A47J 31/06

(54) **A COFFEE BREWING DEVICE**

(30) Priority: 20.06.2018 CN 201810636561
(71) Applicant: Huiyang Allan Plastic & Electric Industries Co., Limited, Huizhou City, Guangdong 516035 (CN)
(72) Inventor: CHEUNG, Shu Sang, Huizhou City, Guangdong (CN); PANG, To Yin, Huizhou City, Guangdong (CN)
(74) Representative: Murphy, David John

(57) **Abstract**

A coffee brewing device, comprising a filter chamber in which the coffee is brewed. A shower-like shower head is connected to a water supply system so as to supply water to the filter chamber. The shower head is provided above the filter chamber to define a sealed space for brewing coffee. The device further comprises a vacuum port provided in fluid communication with the sealed space, wherein the vacuum port is connected to a vacuum device. A main control board (2) is also provided, wherein the water supply system (6) and the vacuum device (7) are connected to and controlled by the main control board. During the brewing process, heated water is provided in even contact with the ground coffee within the filter chamber. The brewing time is controllable by operation of the vacuum device, and the coffee is brewed out to maintain the original taste of the coffee. By setting the vacuum device, it is possible to control the brewing process under a vacuum state within the sealed space of the filter chamber. In this way the length of time that the coffee powder is held in contact with the water can be controlled to ensure optimum brewing. The invention has simple structure that easy to operate.

## Description

### TECHNICAL FIELD

The invention relates to the technical field of household appliances and in particular to coffee brewing devices.

### BACKROUND OF THE INVENTION

With the increasing standard of living, the number of people drinking coffee is increasing. As a result coffee machines have entered thousands of households, and are used as a common household appliance. As the taste for coffee increases, consumers hope to drink incense, rich and delicious coffee.

Both the brewing time and the amount of water used in the coffee machine directly affect the taste of the coffee. Existing coffee machine nozzles spray hot water onto coffee powder to fuse the hot water with the coffee powder.

Currently, coffee machines are designed to brew coffee based on the experience of the brewer. The typical brewer can therefore find it difficult to select the optimum brewing times and water levels to brew the best coffee. In this regard, all too often the coffee is given insufficient brewing time, which can result in insufficient fragrance, or too much brewing time, which can damage the taste of the coffee.

### BRIEF SUMMARY OF THE INVENTION

In order to solve the above technical problems, the present invention provides a coffee brewing device in accordance with claim 1. The coffee brewing device of the present invention addresses the technical problems of coffee brewing that result from the water temperature being too high or too low for optimum brewing. The present invention also provides a coffee machine that has a less complicated structure.

The coffee brewing device, comprising: a filter chamber in which the coffee is brewed; a shower-like shower head that is connected to a water supply system so as to supply water to the filter chamber, and wherein the shower head is provided above the filter chamber to help define a sealed space for brewing coffee; a vacuum port provided in fluid communication with the sealed space, wherein the vacuum port is connected to a vacuum device; and a main control board, wherein the water supply system and the vacuum device are connected to and controlled by the main control board.

Without the vacuum device water supplied to the filter chamber by the shower head would be free to flow through the filter chamber. The main control board operates the vacuum device to maintain a vacuum within the sealed space of the filter chamber so that water is held in contact with the coffee for as long as is needed to ensure optimum brewing time. That is to say the main control board operates the vacuum device to control the brewing time (i.e. the time that the water and coffee are held in contact with one another).

Preferably, the vacuum device may comprise: a vacuum pump and an air tube, one end of the air tube being connected to the vacuum port and the other end of the air tube being connected to the vacuum pump; and wherein the vacuum pump is connected to and controlled by the main control board.

Preferably, the water supply system may comprise: a water tank, a water pump, a heater and a water tube, wherein the water tube connects the shower head to the water tank via the water pump and the heater; and wherein the heater and the water pump are respectively connected to and controlled by the main control board.

Preferably, the shower head may be a shower device capable of adjusting the amount of water discharged into the filter chamber.

Preferably the coffee brewing device may further comprise an "E" shaped stand that comprises: an upper board, a middle board, a lower board and a vertical board, wherein the upper board, the middle board and the lower board are vertically disposed on the vertical board in sequence; wherein the upper board and the middle board connect with the vertical board to form an upper stand space, within which the filter chamber is received; and wherein the lower board and the middle board connect with the vertical board to form a lower stand space, within which a coffee cup can be placed to receive coffee from the filter chamber.

Further preferably the middle board may be provided with a coffee spout.

Additionally or alternatively a seal ring may be arranged between the upper board of the stand and the filter chamber.

Preferably, the middle board may be provided with a base for locating the filter chamber, the base being fixedly connected to the middle board. Further preferably, the base may be provided with a nozzle through which the brewed coffee liquid passes.

Preferably, the filter chamber is provided with filter paper for filtering coffee grounds.

During the operation of the coffee brewing device of the present invention, heated water is provided in even contact with the ground coffee within the filter chamber. To this end it will be appreciated that the shower head is a shower device capable of adjusting the water output, which can ensure that the water supplied to the filter chamber contacts with the coffee in a more uniform manner. This increases the contact surface of the water and coffee and shortens the brewing time.

The brewing time is controllable and the coffee is brewed out to maintain the original taste of the coffee.

By way of the vacuum device, it is possible to control the brewing process to a vacuum state within the sealed space of the filter chamber. In this way, the brewing time during which the coffee powder is in contact with the water can be controlled.

The water supply system is provided to automatically supply hot water of a suitable temperature, does not require an additional heating device, and has a high degree of integration.

The invention has simple structure that is easy to operate and provides good coffee brewing results.

### BRIEF DESCRIPTION OF THE DRAWINGS

The present invention will be described with reference to the embodiments shown in the figures, wherein:

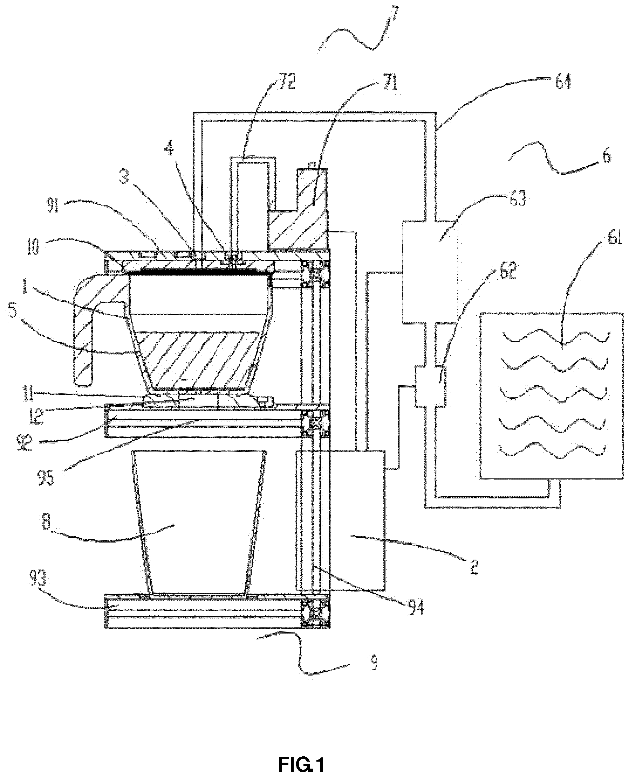

Figure 1 is a partially cutaway perspective view of the overall structure of the coffee brewing device of the present invention.

### DETAILED DESCRIPTION OF THE INVENTION

In order to allow those skilled in the art to better understand the technical solutions of the present invention, the present invention will be further described below.

As shown in Figure 1, the present invention discloses a coffee brewing device, comprising a filter chamber 1 for brewing coffee, a coffee cup 8 for receiving the coffee liquid brewed in the filter chamber, and a stand for placing the filter and the coffee cup.

The filter chamber 1 is provided with filter paper 5 for filtering coffee grounds.

A shower-like shower head 3 is provided above the filter chamber 1 to help define a sealed space in which coffee can be brewed. The shower head is connected to a water supply system 6 so as to supply water to the filter chamber 1.

A vacuum port 4 is also provided in fluid communication with the sealed space of the filter chamber 1. The vacuum port is connected to a vacuum device 7.

Located adjacent to the filter chamber 1 is a main control board 2. The water supply system 6 and the vacuum device 7 are connected to and controlled by the main control board.

The vacuum device 7 comprises a vacuum pump 71 and an air tube 72, one end of the air tube is connected to the vacuum port of the filter chamber, the other end of the air tube is connected to a vacuum pump, and the vacuum pump is connected to the main control board.

The operation of the vacuum device 7 enables the coffee brewing process to be performed in a vacuum state without leaking while brewing. It has been found that this means that the coffee powder makes better contact with the water, and the brewed coffee is more fragrant and maintains its original taste.

The water supply system 6 comprises a water tank 61, a water pump 62, a heater 63 and a water tube 64, wherein the water tube connects the shower head 3 to the water tank via the water pump and the heater.

The heater and the water pump of the water supply system are respectively connected to and controlled by the main control board.

The setting of the heater controls the water temperature of the brewing coffee to about 93 °C, does not require an additional heating device, and has a high degree of integration, realizing automatic water supply and convenient brewing.

The coffee brewing device comprising an "E" shaped stand (9) that comprises an upper board 91, a middle board 92, a lower board 93 and a vertical board 94. As can be seen from Figure 1, the upper board, the middle board and the lower board are vertically disposed on the vertical board in sequence.

The upper board 91 and the middle board 92 are connected to the vertical board 94 to form an upper stand space, within which the filter chamber 1 is received.

The lower board 93 and the middle board 92 are connected to the vertical board 94 to form a lower stand space, within which a coffee cup can be placed to receive coffee from the filter chamber.

The middle board is provided with a coffee spout to direct coffee to a coffee cup located in the lower stand space.

In addition, a seal ring 10 is provided between the upper board 91 of the stand 9 and the filter chamber 1 to help maintain the sealed space within which the coffee brewed under a vacuum.

The middle board 92 is provided with a base 11 that helps locate the filter chamber 1 in position so that the sealed space can be created. The base is fixedly connected to the middle board 92 of the stand 9.

The base 11 is provided with a nozzle 12 through which the brewed coffee liquid passes.

The operation of the coffee brewing device of the present invention will now be briefly described. First an appropriate amount of coffee powder is added into the filter chamber 1.

The filter chamber, with the coffee power, is placed in the upper stand space of the "E" shaped stand and a clean coffee cup is placed below the filter chamber in the lower stand space.

The vacuum device and the water supply system are operated by main control board such that the water supply system injects an appropriate amount of water into the filter chamber to match the amount of coffee powder held therein. Typically, the temperature of the feed water is controlled at about 93 °C, however it will be appreciated that this may be varied as required. After the water injection is completed, the vacuum device continues to work for 30 to 60 seconds. This ensured that the coffee powder is kept in full contact with the hot water for a suitable brewing time. After which the vacuum device is turned off by the main control board and the fragrant coffee liquid enters the coffee cup through the filter paper to complete the brewing process.

As will be appreciated, the whole operation process is simple and easy to control yet it is capable of delivering a consistent brewed coffee. The coffee brewing device will use electronic control to achieve a segmented brewing effect.

The invention provides a coffee brewing device, during the brewing process, the heated water is in even contact with the ground coffee, the brewing time is controllable, and the coffee is brewed out to maintain the original taste of the coffee.

By setting the vacuum device, it is possible to control the brewing process to a vacuum state, the time and speed of the coffee powder in contact with the water can be controlled; the water supply system is provided to automatically supply hot water of a suitable temperature, does not require an additional heating device, and has a high degree of integration.

The shower head is a shower device capable of adjusting the water output, which can ensures a more uniform contact between the heated water and the coffee, which increases the contact surface of the water and coffee and shortens the brewing time.

The skilled person will appreciate that the brewing device of the present invention has simple structure, is easy to operate and is easy to use.

It will be apparent to those skilled in the art that various modifications and variations can be made in the embodiments of the invention without departing from the scope of the claimed invention. Thus, it is intended that embodiments of the invention cover the modifications and variations of this invention provided they come within the scope of the appended claims and their equivalents.

### Reference numerals:

- 1: filter
- 2: main control board
- 3: shower head
- 4: vacuum port
- 5: filter paper
- 6: water supply system
61 water tank
62 water pump
63 heater
64 water tube
- 7: vacuum device
71 vacuum pump
72 air tube
- 8: coffee cup
- 9: stand
91 upper board
92 middle board
93 lower board
94 vertical board
95 coffee spout
- 10: seal ring
- 11: base
- 12: nozzle

## Claims

1. A coffee brewing device, comprising:
a filter chamber (1) in which the coffee is brewed;
a shower-like shower head (3) that is connected to a water supply system (6) so as to supply water to the filter chamber (1), and wherein the shower head (3) is provided above the filter chamber to help define a sealed space for brewing coffee;
a vacuum port (4) provided in fluid communication with the sealed space, wherein the vacuum port is connected to a vacuum device (7); and
a main control board (2), wherein the water supply system (6) and the vacuum device (7) are connected to and controlled by the main control board.

2. The coffee brewing device of claim 1, wherein the vacuum device (7) comprises:
a vacuum pump (71) and an air tube (72), one end of the air tube being connected to the vacuum port (4) and the other end of the air tube being connected to the vacuum pump; and
wherein the vacuum pump is connected to and controlled by the main control board (2).

3. The coffee brewing device of claim 1 or 2, wherein the water supply system (6) comprises:
a water tank (61), a water pump (62), a heater (63) and a water tube (64), wherein the water tube connects the shower head (3) to the water tank via the water pump and the heater; and
wherein the heater and the water pump are respectively connected to and controlled by the main control board (2).

4. The coffee brewing device of claim 1, 2 or 3, wherein the shower head (3) is a shower device capable of adjusting the amount of water discharged into the filter chamber (1).

5. The coffee brewing device of any of the preceding claims, further comprising an "E" shaped stand (9) that comprises:
an upper board (91), a middle board (92), a lower board (93) and a vertical board (94), wherein the upper board, the middle board and the lower board are vertically disposed on the vertical board in sequence;
wherein the upper board and the middle board connect with the vertical board to form an upper stand space, within which the filter chamber is received; and
wherein the lower board and the middle board connect with the vertical board to form a lower stand space, within which a coffee cup can be placed to receive coffee from the filter chamber.

6. The coffee brewing device of claim 5, wherein the middle board (92) is provided with a coffee spout (95).

7. The coffee brewing device of claim 5 or 6, wherein a seal ring (10) is arranged between the upper board (91) of the stand (9) and the filter chamber (1).

8. The coffee brewing device of claim 5, 6 or 7, wherein the middle board (92) is provided with a base (11) for locating the filter chamber (1), the base being fixedly connected to the middle board.

9. The coffee brewing device of claim 8, wherein the base is provided with a nozzle (12) through which the brewed coffee liquid passes.

10. The coffee brewing device of claims 1 to 9, wherein the filter chamber is provided with filter paper (5) for filtering coffee grounds.
